# EUROPÄISCHE PATENTSCHRIFT

(11) **EP 0 889 841 B1**
(45) Veröffentlichungstag und Bekanntmachung des Hinweises auf die Patenterteilung: **26.01.2000**
(21) Anmeldenummer: 97907096.8
(22) Anmeldetag: 12.03.1997
(51) Int. Cl.: B65G 1/137

(54) **VERFAHREN UND VORRICHTUNG ZUM AUTOMATISCHEN BEREITSTELLEN VON STÜCKGUTARTIGEN WAREN IN, AUF ODER AN EINZELNE TRANSPORTEINRICHTUNGEN**
METHOD AND DEVICE FOR THE AUTOMATIC LOADING OF GOODS IN THE FORM OF ARTICLES INTO OR ONTO INDIVIDUAL TRANSPORT CONTAINERS
PROCEDE ET DISPOSITIF DE CHARGEMENT AUTOMATIQUE D'ARTICLES SOUS FORME DE MARCHANDISES DE DETAIL DANS OU SUR DES DISPOSITIFS DE TRANSPORT

(30) Priorität: 18.03.1996 DE 19610594
(43) Veröffentlichungstag der Anmeldung: 13.01.1999
(73) Patentinhaber: Quelle Aktiengesellschaft, 90762 Fürth (DE)
(72) Erfinder: Christ, Ferdinand, 91575 Windsbach (DE)
(74) Vertreter: Matschkur, Lindner, Blaumeier Patent- und Rechtsanwälte
(86) Internationale Anmeldenummer: EP9701261
(87) Internationale Veröffentlichungsnummer: WO9734821

(56) Entgegenhaltungen:
- EP-A- 0 494 014
- US-A- 4 364 217
- US-A- 4 542 808
- FÖRDERN UND HEBEN, Bd. 19, Nr. 12, September 1969, Seiten 727-732, XP000670542 HEPTNER: "Methoden der Warenverteilung und Auftragszusammenstellung in den USA" in der Anmeldung erwähnt

## Beschreibung

Die Erfindung betrifft ein Verfahren sowie eine Vorrichtung zum automatischen Bereitstellen von stückgutartigen ggfs. kommissionierten Waren in, auf oder an einzelne Transportelemente wie Kartons, Paletten oder dgl.

Insbesondere im Versandhandel ist es erforderlich, stückgutartige Waren zu kommissionieren, d. h. aus einem Vorrat unterschiedlichster Waren nach einem vorgegebenen Auftrag nach Anzahl und Art zusammenzustellen, in einen Versandkarton zu füllen und an den Auftraggeber zu versenden. Grundsätzlich ähnliche Vorgänge sind bei Aufbringen von stückgutartigen Waren auf Versandpaletten oder beim Anbringen wie Aufhängen auf kleiderstangenähnliche Transportelemente zu beachten. Solange ausschließlich Waren einer einzigen Art zu verarbeiten sind, sind die Vorgänge relativ einfach. Im Versandhandel sind jedoch, wie erwähnt, Waren unterschiedlichster Art und Größe zu verarbeiten. Nach dem Stand der Technik hat man versucht, das Heraussuchen der jeweiligen einzelnen Waren und deren Zusammenstellen zu einer Kommission entsprechend einem vorgegebenen Auftrag weitestgehend zu automatisieren. Ausführungsformen und Beispiele derartiger Verfahren und Vorrichtungen zum Kommissionieren von einzelnen Artikeln sind beispielsweise beschrieben in EP 0 457 158 B1, EP 0 183 074 A1, DE 34 12 025 A1, in der Zeitschrift "Industrie-Anzeiger" Band 95 Nr. 40, 11. Mai 1973, Leinfelden-Echterdingen (DE), S. 824 - 826; W. Fürdenschess: "Möglichkeiten automatischer Kommissioniersysteme" und in der Zeitschrift "Fördern und Heben", Band 19, 1969, Heft 12, S. 727 - 731, K. Heptner, "Methoden der Warenverteilung und Auftragszusammenstellung in den USA".

Alle diese Druckschriften aus dem Stand der Technik beschäftigen sich mit der Zusammenstellung einer Kommission mit möglichst geringem Aufwand an Lagerfläche und möglichst geringer Fehlerquote. Nach dem Stand der Technik wird die zusammengestellte Kommission in einem Haufen auf einen Ausgangsförderer gegeben, ggfs. in einen Zwischenbehälter eingeführt. Die EP 0 457 158 B1 erwähnt beiläufig, daß statt eines Zwischenbehälters auch ein Versandkarton verwendet werden kann, da die Daten einer Kommission bekannt sind. Die Vorgänge zwischen der Zusammenstellung einer Kommission und der Bereitstellung für den endgültigen Versand sind jedoch nicht einfach strukturiert, vielmehr kann es zu Fehlern kommen, die nicht nur diesen Bereich blockieren, sondern die gesamte Anlage, also auch die Kommissionszusammenstellung, beeinflussen können. Es ist daher erwünscht, die Vorgänge zwischen der Zusammenstellung einer Kommission und der Abgabe an den Versand möglichst zu automatisieren und dabei alle notwendigen Maßnahmen zu berücksichtigen. Ferner ist es erwünscht, diese Vorgänge in ihrer Geschwindigkeit möglichst zu beschleunigen.

Dabei sind die Notwendigkeiten des Versandhandels zu berücksichtigen. Die zusammengestellte Kommission ist in einen entsprechenden Behälter, wie einen Versandkarton, einzuführen, oder auf eine entsprechende Palette aufzulegen oder an ein entsprechendes Transportelement, wie einer kleiderstangenähnlichen Anordnung, aufzuhängen. Nach diesem Packvorgang ist eine Prüfung vorzunehmen, die herkömmlich eine Sichtprüfung ist. Es sind ferner Versandpapiere bereitzustellen und hinzuzufügen. Häufig ist ein Komplettiervorgang erforderlich, der üblicherweise darin besteht, daß Füll- bzw. Stützmaterial, Werbegeschenke und/oder Werbeprospekte zugegeben werden. Nach einem ggfs. erforderlichen Verschließen werden die Versandadressen aufgebracht und die für den Versand erforderlichen Daten ermittelt und notiert, etwa Gewicht, Format oder dgl., um auch die Versandkosten festlegen zu können, wobei hier zu unterscheiden ist, ob der Empfänger die Versandkosten zu tragen hat oder der Absender, ob der Empfänger nicht nur die Versandkosten sondern auch die Gesamtkosten zugleich zu entrichten hat (etwa bei einer Versendung per Nachnahme) und dgl..

Es ist daher Aufgabe der Erfindung, ein Verfahren und eine Vorrichtung der eingangs genannten Art so auszubilden, daß bei weitestgehend automatischem und schnellem Ablauf keine erhöhte Fehlergefahr besteht.

Die Aufgabe wird bei einem Verfahren durch die Merkmale des Anspruchs 1 und bei einer Vorrichtung durch die Merkmale des Anspruchs 10 gelöst. Die Erfindung wird durch die Merkmale der Unteransprüche weitergebildet.

Die Erfindung wird im folgenden anhand mehrerer Ausführungsbeispiele näher erläutert. Es zeigen:
- Fig. 1: schematisch den verfahrensmäßigen Ablauf unter Steuerung durch eine gemeinsame Steuervorrichtung,
- Fig. 2 - Fig. 8: schematisch verschiedene praxisbezogene Ausführungsbeispiele.

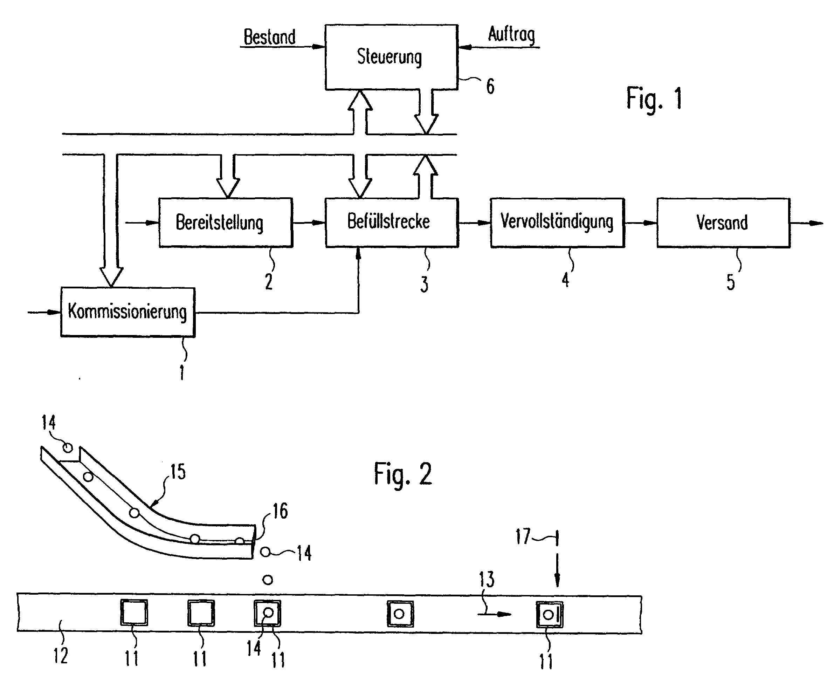

Fig. 1 zeigt zunächst den prinzipiellen Ablauf des erfindungsgemäßen Verfahrens und damit auch die systemkonforme Anordnung zugehöriger Vorrichtungen.

Ein Kommissionierschritt 1 bezeichnet dabei einen Anlagenteil bzw. einen Verfahrensschritt, in dem stückgutartige Waren in der erforderlichen Anzahl zur Verfügung gestellt werden wie sie von einem Kunden erwünscht ist. In der Praxis, jedoch nicht notwendigerweise, wird es sich auch um unterschiedliche Waren handeln, so daß tatsächlich von einer Kommissionierung gesprochen werden kann. Ein Bereitstellschritt 2 bezeichnet einen Anlagenteil bzw. einen Verfahrensschritt, in dem das jeweils erforderliche Transportelement bereitgestellt wird, z.B. aus einem Vorrat herausgesucht und für die Aufnahme von Waren aufbereitet wird. Bei diesen Transportelementen kann es sich um Versandkartons, Versandbehälter, Tüten, Beutel aber auch Paletten oder dgl. handeln, abhängig von den jeweiligen Waren und auch abhängig von dem jeweils zugehörigen Versandweg. Eine Befüllstrecke 3 bezeichnet einen Anlageteil bzw. einen Verfahrensschritt, in dem die im Kommissionierschritt 1 zur Verfügung gestellten Waren in, auf bzw. an die im Bereitstellschritt 2 zugeführten Transportelemente eingefüllt, aufgelegt bzw. angebracht werden. An die Befüllstrecke 3 kann sich eine übliche Weiterverarbeitung anschließen, wie ein Vervollständigungsschritt 4, in dem die Vollständigkeit geprüft wird, wobei dieser Vervollständigungsschritt 4 auch eine Gewichtsermittlung, die Einlage von Versandpapieren, die Komplettierung wie durch Werbegeschenke, Füll- bzw. Stützmaterial und/oder Werbeprospekten beinhalten kann. Am Ende des Vervollständigungsschritts 4 wird das Transportelement ggfs. verschlossen. Anschließend wird die verschlossene Zusammenstellung aus Waren und zugehörigen Transportelement einem üblichen Versandschritt 5 zugeführt.

Die synchronisierte Steuerung des Kommissionierschritts 1, des Bereitstellschritts 2 und der Befüllstrecke 3 erfolgt durch eine gemeinsame Steuervorrichtung 6, die nicht nur Befehle an die einzelnen diese Verfahrenschritte ausführenden Vorrichtungen abgibt, sondern auch Zustands- bzw. Rückmeldungen erhält und darüberhinaus auch Meldungen über die zu erfüllenden Aufträge und deren Reihenfolge und auch Meldungen über die zugeführten und abgeführten einzelnen Teile, Waren und Transportelemente, was in Fig. 1 kurz mit "Bestand" bezeichnet ist.

Ein wesentliches Element der vorliegenden Erfindung ist dabei, daß aufgrund der gewählten Reihenfolge und der gemeinsamen Steuerung durch die Steuervorrichtung 6 eine Beschleunigung dadurch erreicht werden kann, daß beim Übergang von dem Kommissionierschritt 1 zur Befüllstrecke 3 die jeweiligen zusammengestellten Waren oder Kommissionen direkt in, auf bzw. an das jeweilige Transportelement abgegeben werden, wobei das Transportelement an der Befüllstrecke 3 nicht anhalten muß, sondern dort kontinuierlich an der Abgabestelle für die im Kommissionierschritt zugeführten Waren vorbeigefördert wird. Dies vermeidet Staugefahr und stellt trotzdem sicher, daß alle Aufträge zutreffend erfüllt werden.

Dies sei im einzelnen anhand der verschiedenen Ausführungsformen näher erläutert.

Bei der Ausführungsform gemäß Fig. 2 werden einzelne durch quadratische Rahmen dargestellte Transportelemente, wie Transportkartons 11, auf einem Förderband 12 kontinuierlich transportiert (Pfeile 13). Die hier durch Kreise dargestellten Waren 14 werden im Kommissionierschritt 1 (Fig. 1) über eine schematisch als Rutsche 15 dargestellte Zuführeinrichtung einer stationären Abgabestelle 16 zugeführt und in benötigter Menge an die an dieser kontinuierlich vorbeilaufenden Transportkartons 11 abgegeben. Zu diesem Zweck kann an der Abgabestelle 16 der Zuführeinrichtung 15 eine Schleuse, eine Blende oder dgl. (nicht im einzelnen dargestellt) vorgesehen sein, deren Öffnung durch die Steuerung 6 (Fig. 1) bewirkt wird, abhängig davon, ob ein Transportkarton 11 an der Abgabestelle 16 vorhanden ist oder nicht, was mittels eines Detektors (nicht dargestellt) festgestellt wird. Anschließend (die hierzu erforderlichen Vorrichtungen sind im einzelnen nicht dargestellt) wird wie üblich geprüft, ob die Ware 14 tatsächlich in dem Transportkarton 11 vorhanden ist. Bejahendenfalls werden Versandpapiere 17 hinzugefügt.

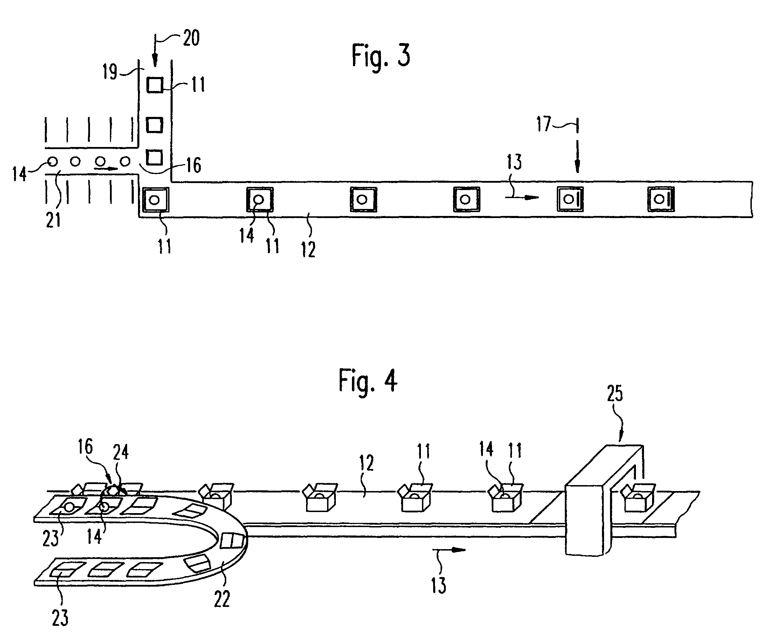

Das Ausführungsbeispiel gemäß Fig. 3 unterscheidet sich von dem gemäß Fig. 2 im wesentlichen durch eine andere Art einer Zuführeinrichtung, so daß weitestgehend die gleichen Bezugszeichen wie in Fig. 2 verwendet sind.

Beim Ausführungsbeispiel gemäß Fig. 3 werden die leeren Transportelemente, nämlich leere Transportkartons 11, die durch kleinere Quadrate symbolisiert sind, über ein weiteres Förderband 19 gemäß dem Pfeil 20 zugeführt, während die Waren 14 über einen weiteren Förderer 21 zugeführt werden. Die Waren 14 können hier auch durch Kommissionen gebildet sein. Das Zusammenführen von Waren 14 und Transportkarton 11 kann also bei einer anderen Fördergeschwindigkeit der leeren Transportkartons 11 mittels des Förderbandes 19 erfolgen als die weitere, übliche Verarbeitung auf dem Förderband 12. Hierdurch kann eine Pufferung erreicht werden.

Das Ausführungsbeispiel gemäß Fig. 4 nimmt ebenfalls Bezug auf die Ausführungsbeispiele gemäß Fig. 2 und 3 und unterscheidet sich zum einen durch eine etwas konkretere Darstellung sowie durch eine andere Zuführeinrichtung für den Kommissionierschritt 1, so daß auch hier weitestgehend die gleichen Bezugszeichen verwendet worden sind.

Die Waren 14 werden hier auf einem Umlaufförderer 22 herbeigeführt, sie sind an anderer Stelle auf diesen Umlaufförderer 22 aufgebracht worden, beispielsweise auch in Form einer Kommission. Der Umlaufförderer 22 läuft während eines bestimmten Abschnitts seines Weges parallel und im wesentlichen mit ähnlicher Geschwindigkeit wie das Förderband 12, auf dem sich die zunächst leeren Transportkartons 11 befinden. Der Umlaufförderer 22 enthält Abkippeinrichtungen 23, auf denen sich die jeweiligen Waren 14 befinden. In dem erwähnten Abschnitt des Gleichlaufes wird, von der Steuerung 6 (Fig. 1) gesteuert, die Abkippeinrichtung 23 betätigt, wodurch diese die Waren 14 in den in etwa auf gleicher Höhe befindlichen zunächst leeren Transportkarton 11 abkippt gemäß dem Bewegungsweg, der durch den Pfeil 24 symbolisiert ist.

In einer Station 25, die schematisch durch eine Art Brücke dargestellt ist, erfolgt ein übliches Wiegen des mit Waren 14 versehenen Kartons 11. Dieses Wiegen in der Station 25 kann bereits genügen, um die Prüfung innerhalb des Vervollständigungsschritts 4 nach Fig. 1 zu erreichen, ob alle bzw. die richtigen Waren 14 in den zugehörigen Transportkarton 11 eingelegt sind, da die Gewichte jeder Ware 14 sehr genau bekannt sind, und kann demnach auch die Zufuhr von zugehörigen Versandpapieren (hier nicht dargestellt) auslösen.

Zur Wiegestation 25 ist noch zu bemerken, daß es an sich bekannt ist, auf einem Transportband 12 geförderte Waren ohne deren Abnehmen von dem Förderband wiegen zu können. Selbstverständlich sind aber auch Wiegestationen 25 verwendbar, die von dem Transportband 12 unabhängig sind und nach dem Wiegevorgang die Waren an ein weiteres Transportband weitergeben (nicht im einzelnen dargestellt).

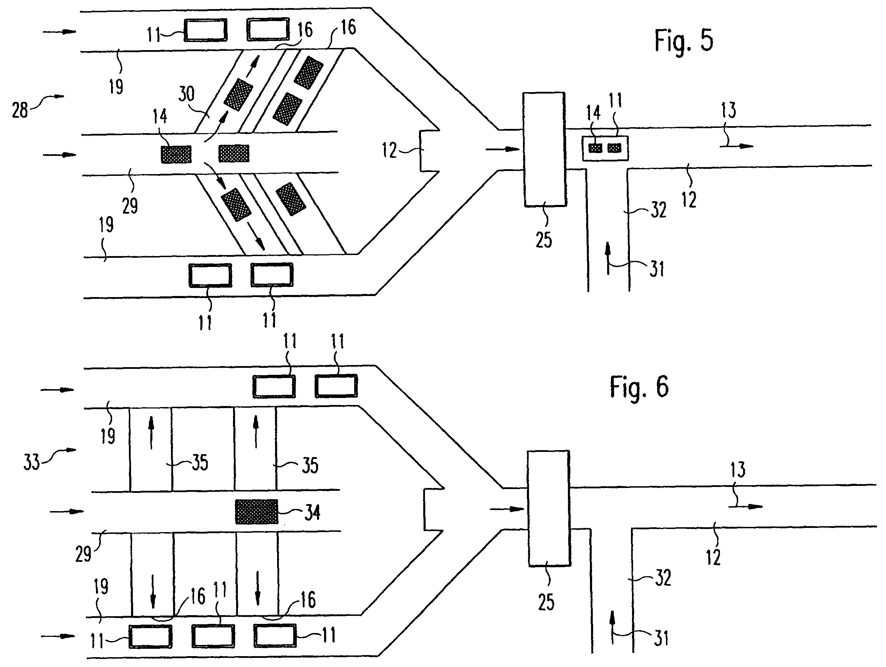

Das Ausführungsbeispiel gemäß Fig. 5 unterscheidet sich im wesentlichen durch die andere Art der Zuführeinrichtung von dem Ausführungsbeispiel gemäß Fig. 4. Bei der in Fig. 5 dargestellten Zuführeinrichtung 28 handelt es sich beispielsweise um einen Kommissionierautomaten wie er in EP 0 457 158 B1 im einzelnen erläutert ist. Demgemäß werden einzelne Waren 14, die von außerordentlich unterschiedlichem Typus sein können, über einen Zuführförderer 29 zugeführt und von einem Rechner gesteuert auf verschiedene Schrägförderer 30 in bevorzugter Ausrichtung verteilt. Über diese Schrägförderer 30 werden die einzelnen Waren auf die über Förderbänder 19 zugeführten leeren Transportkartons 11 nach Vorgabe der jeweiligen Kommission, synchron mit dieser und gesteuert durch die Steuervorrichtung 6 (Fig. 1), verteilt. Die mit den einzelnen nach einer speziellen Kommission zusammengestellten Waren 14 versehenen Transportkartons 11 gelangen dann zu einem gemeinsamen Förderband 12 und über dieses wie üblich zu der Wiegestation 25. Vor dem Verschließen kann eine an sich übliche Komplettierung erfolgen, wobei die Komplettierungsmaterialien gemäß dem Pfeil 31 beispielsweise über eine Rutsche oder einen anderen Förderer 32 einem bereits gewogenen bzw. geprüften mit Waren 14 gefüllten Karton 11 zugeführt werden. Wie bereits erwähnt, können die Komplettierungmaterialien Füll- bzw. Stützmaterial umfassen, aber auch Werbegeschenke und Werbeprospekte.

Das Ausführungsbeispiel gemäß Fig.6 unterscheidet sich von dem gemäß Fig. 5 durch eine andere Konfiguration der Zuführeinrichtung. Die dortige Zuführeinrichtung 33 ist derart ausgebildet, daß Zwischenbehälter 34 über den Förderer 29 zugeführt werden, wobei die Zwischenbehälter 34 die Waren 14, die Kommissionen oder nur Teile davon enthalten. An geeigneten Stellen werden diese Zwischenbehälter 34 ausgeleert, wobei die entsprechenden Waren dann über Rutschen 35 den über das Förderband 19 zugeführten leeren Transportkartons 11 ggfs. an mehreren Stellen längs des Förderbandes 19 zugeführt werden.

Die weitere Behandlung erfolgt wie in dem Ausführungsbeispiel gemäß Fig. 5.

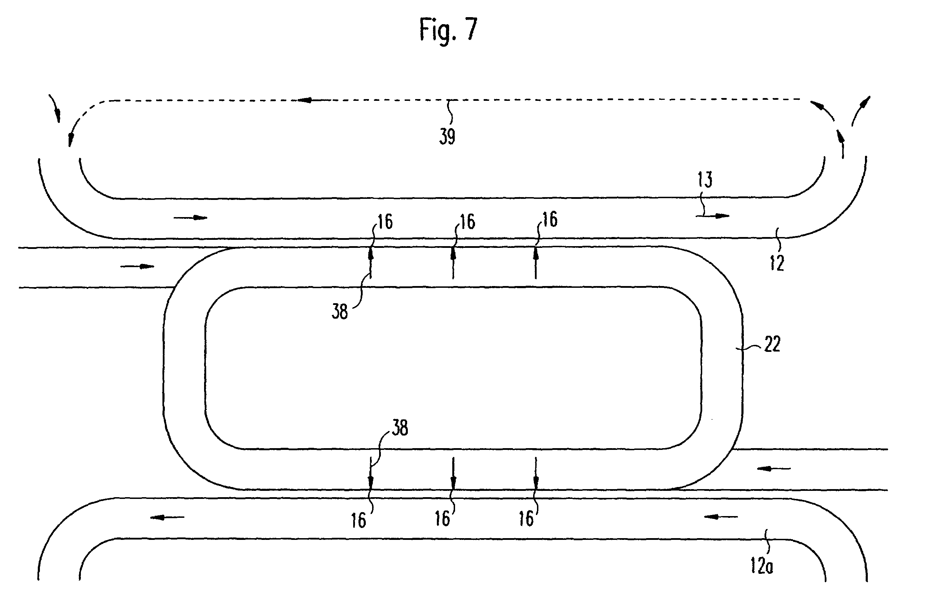

Das Ausführungsbeispiel gemäß Fig. 7 lehnt sich an das gemäß Fig. 4 an insoweit, als ein Umlaufförderer 22 vorgesehen ist. Dem Umlaufförderer 22 werden über mehrere Zuführförderer 36 und 37 Waren 14 oder zusammengestellte Kommissionen oder Teilkommissionen zugeführt. An dem Umlaufförderer 22 laufen parallel Förderbänder 12 und 12a vorbei, auf denen sich, wie anhand Fig. 4 bereits erläutert, Transportkartons 11 befinden, in die an geeigneten Stellen die Waren 14, einzeln oder in Form von Kommissionen oder Teilkommissionen übergeben werden. Dies ist durch Pfeile 38 symbolisiert. Dabei kann dies etwa durch Abkippeinrichtungen erfolgen, wie dies anhand Fig. 4 erläutert ist. Die Ausführungsform gemäß Fig. 7 erlaubt es, mehrere Transportkartons 11 gleichzeitig mit unterschiedlichen Waren 14 befüllen zu können und/oder einen Transportkarton 11 an mehreren Stellen nacheinander befüllen zu können.

Fig. 7 zeigt noch eine weitere Option schematisch. Ein noch nicht vollständig gefüllter Transportkarton 11 kann über eine Rückführschleife 39 nochmals an dem Umlaufförderer 22 vorbeibewegt werden.

Wie erwähnt, kann in den gleichen Transportkarton 11 an unterschiedlichen Stellen nacheinander eine Ware eingelegt werden. Dies ist dann von Bedeutung, wenn eine Kommission stark unterschiedliche Waren umfaßt und/oder es zweckmäßig oder notwendig ist, bestimmte Waren unterhalb anderer Waren anzuordnen. Als Beispiel sei an eine Kommission gedacht, die aus einem großformatigem schweren Buch, verpackten Hemden oder Blusen sowie weiteren kleinen möglicherweise sogar bruchempfindlichen Teilen besteht. Es ist dann notwendig, das Buch, ggfs. sogar in einer genau vorbestimmten Lage, als erstes in einen Transportkarton 11 abzulegen, darauf das verpackte Hemd oder die verpackte Bluse aufzulegen und die übrigen Teile anschließend einzufüllen. Die Reihenfolge des Einbringes bestimmter Waren und Teilkommissionen in einen bestimmten Transportkarton 11 kann durch die Steuervorrichtung 6 (Fig. 1) automatisch und synchronisiert gesteuert werden.

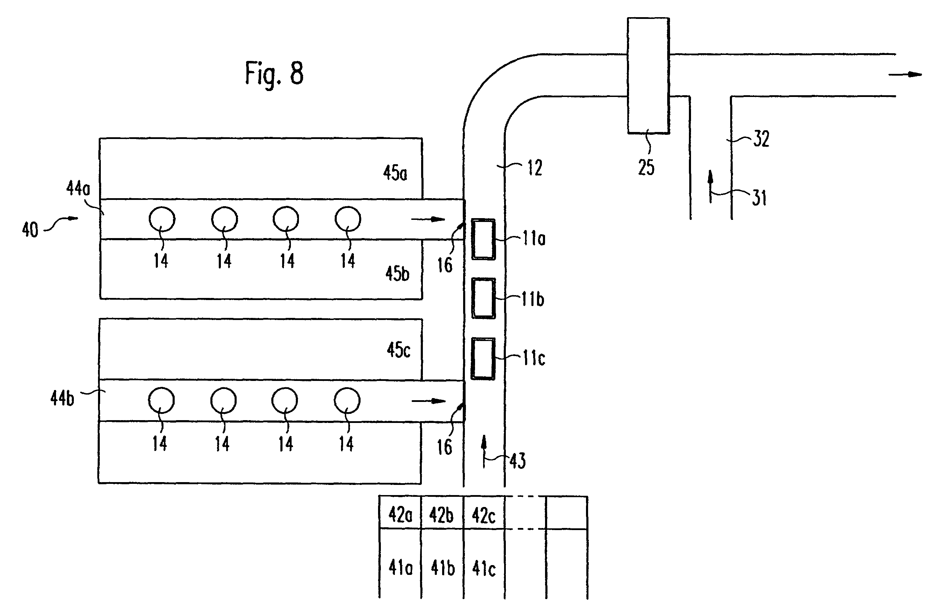

Auch die Ausführungsform gemäß Fig. 8 geht von den schematischen Darstellungen der bisherigen Ausführungsbeispiele aus. In Fig. 8 ist dargestellt, daß Transportkartons 11a, 11b, 11c, ... die äußerst unterschiedliche Abmessungen haben können, auf dem Förderband 12 an Abgabestellen 16 einer Zuführeinrichung 40 nacheinander vorbeigeführt werden. Die einzelnen Transportkartons werden aus einem Vorrat entnommen und in zugehörigen Aufrichtmaschinen automatisch aufgerichtet. Jedem Transportkartonformat ist dabei ein eigener Vorrat und eine eigene Aufrichtmaschine zugeordnet. So ist dem Transportkarton 11a ein Vorrat 41a und eine Kartonaufrichtmaschine 42a, dem Transportkarton 11b ein Vorrat 41b und eine Kartonaufrichtmaschine 42b etc. zugeordnet, wobei von der Steuerung 6 (Fig. 1) automatisch gesteuert der jeweils erforderliche Karton 11a, 11b, 11c, ... in der ebenfalls von der Steuerung 6 aufgrund bestimmter Aufträge gesteuerten Reihenfolge gemäß dem Pfeil 43 auf das Förderband 12 aufgesetzt wird und zwar auch in einem gegebenen Abstand. An der mindestens einen Abgabestelle 16 werden dann die jeweiligen Waren 14 in den jeweiligen Karton 11a, 11b, 11c, ... ebenfalls durch die Steuerung 6 automatisch gesteuert, abgegeben. Förderern 44a, 44b der Zuführeinrichtung 40, die zu Abgabestellen 16 führen, können die Waren über jeweilige Kommissionierautomaten 45a, 45b, 45c, ... gesondert oder gemeinsam zugeführt werden. Die Füllung der Kartons 11a, 11b, 11c, ... wird dann in der bereits näher erläuterten Weise weiterbearbeitet.

Alternativ können die Komplettierungsmaterialien auch vor der Wiegestation 25 zugeführt werden, insbesondere wenn sie ein nennenswertes Gewicht besitzen und das Gesamtgewicht für Versandzwecke notwendig ermittelt werden muß. Ferner ist es möglich dann, wenn die Station nicht alle verfügbaren Formate von Transportkartons 11 verarbeiten kann, eine Weiche vorzusehen und sie in verschiedenen entsprechenden Stationen weiterzubearbeiten. Selbstverständlich können diese Schritte, wie an sich ebenfalls bekannt, wie traditionell üblich von Hand durchgeführt werden.

Vorstehend wurde die Erfindung anhand von Ausführungsformen erläutert, bei denen Waren 14 in Transportkartons 11 als Transportelemente eingefüllt werden. Grundsätzlich sind gleiche Vorgänge bei dem Einfüllen von Waren in Versandbehälter, in Tüten, Beutel oder dgl., sowie bei dem Auflegen von Waren auf Paletten möglich und durchführbar, wobei es unter Umständen zweckmäßig oder gar notwendig sein kann, einzelne Waren an der jeweiligen Abgabestelle umzuheben und abzulegen. Ähnliches gilt für andere Arten von Transportelementen, etwa kleiderstangenähnliche Einrichtungen. Dort werden die entsprechenden Waren dann mittels entsprechend ausgebildeter Greifeinrichtungen ergriffen und abgehängt. Ferner ist darauf hinzuweisen, daß, wenn vorstehend Rutschen und Abkippeinrichtungen erwähnt wurden, die Ware(n) 14 auch in anderer Weise in, auf oder an die Transportelemente abgegeben werden kann, etwa durch Schwerkraft oder durch eine geeignete mechanisch arbeitende Einrichtung, von oben nach unten, mit oder ohne Schrägstellung (z. B. von rechts oben nach links unten oder dgl.), usw. Ggfs. kommt abhängig von der Art der Ware auch ein Überstülpen oder ein anderer Sonder-Vorgang in Frage.

Wesentlich ist, daß die Transportelemente, etwa die Transportkartons 11, kontinuierlich an der mindestens einen Abgabestelle 16 vorbeigeführt werden, wobei an der jeweiligen Abgabestelle 16 zu diesem Zeitpunkt, d.h. synchron, die Ware 14, eine ganze Kommission oder lediglich eine Teilkommission zur Verfügung steht. Ferner ist wesentlich, daß die Zufuhr zur Abgabestelle 16, die Vorbeiförderung der Transportelemente, wie der Transportkartons 11, und die Abgabe der an der Abgabestelle 16 zur Verfügung stehenden Ware 14 an das jeweilige Transportelement, wie den Transportkarton 11, von einer gemeinsamen Steuerung 6 gesteuert wird. Hierdurch kann der im Versandhandel wesentliche Schritt der Verpackung nicht nur weitestgehend automatisiert werden, sondern auch in seinem Ablauf an die Arbeitsweise und vor allem die Geschwindigkeit der Kommissioniereinrichtung angepaßt werden. Ferner ist sehr große Flexibilität möglich, so daß insbesondere stark wechselnde aber auch über längere Zeiträume gleichbleibende Zusammenführungen von Transportelementen und Waren sicher und mit hoher Geschwindigkeit möglich sind.

## Patentansprüche

1. Verfahren zum automatischen Bereitstellen von stückgutartigen ggfs. kommissionierten Waren in, auf oder an einzelne Transportelemente wie Kartons, Paletten oder dgl. mit folgenden Schritten
- automatisches Fördern der Waren (14) zu wenigstens einer räumlich vorgegebenen Abgabestelle (16),
- kontinuierliches Vorbeiführen der Transportelemente (11) an der wenigstens einen Abgabestelle (16), und
- Abgeben der Waren (14) an der Abgabestelle (16) in, auf bzw. an das jeweilige Transportelement (11),
wobei das Abgeben, das Herbeifördern der Waren (14) sowie das Vorbeiführen der Transportelemente (11) durch eine gemeinsame Steuervorrichtung (6) so gesteuert werden, daß die für der jeweilige Transportelement (11) jeweils bestimmten Waren (14) zeitrichtig abgegeben werden.

2. Verfahren nach Anspruch 1,
dadurch **gekennzeichnet**,
daß vor Zufuhr eines Transportelements (11) zur Abgabestelle (16) das Transportelement (11) automatisch in den Aufnahmezustand versetzt wird, z. B. einen Karton oder dgl. aus seinem zusammengefalteten Zustand automatisch aufgerichtet wird (41, 42, 43).

3. Verfahren nach Anspruch 1 oder 2,
dadurch **gekennzeichnet**,
daß die bereitzustellenden Waren (14) von einem Förderband oder dgl. durch einen Kommissionierer (1; 15) mit wenigstens einer Rutsche und/oder Abkippeinrichtung (23) in, auf oder an das jeweilige Transportelement (11) gegeben werden, die sich auf wenigstens einem weiteren Förderband (12) an der Rutsche und/oder Abkippeinrichtung vorbeibewegen.

4. Verfahren nach einem der Ansprüche 1 bis 3,
dadurch **gekennzeichnet**,
daß die bereitzustellenden Waren (14) auf eine geschlossene Förderschleife (22) gebracht werden und über eine Abkippeinrichtung (23) in, auf bzw. an die zumindest abschnittsweise parallel vorbeiziehenden Transportelemente (11) gegeben werden.

5. Verfahren nach Anspruch 4,
dadurch **gekennzeichnet**,
daß die bereitzustellenden Waren (14) an wenigstens zwei Stellen auf die geschlossene Förderschleife (22) und/oder von dieser in, auf bzw. an vorbeiziehende Transportelemente (11) gegeben werden (Fig. 7).

6. Verfahren nach einem der Ansprüche 4 oder 5,
dadurch **gekennzeichnet**,
daß die Transportelemente (11) auf wenigstens einem Förderband (12) an der Abkippeinrichtung (23) vorbeigeführt werden.

7. Verfahren nach einem der vorhergehenden Ansprüche,
dadurch **gekennzeichnet**,
daß die Waren (14) mittels wenigstens einem Kommissionierautomaten (45a, 45b), der die Waren (14) automatisch entsprechend eingehender Aufträge zusammenstellt, in, auf, bzw. an die vorbeiziehenden Transportelemente (11) gegeben werden.

8. Verfahren nach einem der vorhergehenden Ansprüche,
dadurch **gekennzeichnet,**
daß von der Steuervorrichtung (5) gesteuert aus einem entsprechenden Vorrat (41a, 41b, 41c) verschiedengroßer bzw. verschiedenartiger Transportelemente (11a, 11b, 11c) ein den jeweiligen Waren (14) nach Art, Anzahl und/oder Größe entsprechendes Transportelement ausgewählt, ggfs. aufbereitet wie aufgerichtet, und zeitgerecht an der zugehörigen mindestens einen Abgabestelle (16) vorbeigeführt wird.

9. Verfahren nach einem der vorhergehenden Ansprüche,
dadurch **gekennzeichnet**,
daß von der Steuereinrichtung (6) gesteuert das jeweilige Transportelement (11) unterschiedlichen Abgabestellen zeitgerecht nacheinander so zugeführt wird, daß insgesamt nur alle Waren (14) einer jeweiligen Kommission diesem Transportelement (11) zugeführt werden (Fig. 5, Fig. 6, Fig. 7).

10. Vorrichtung zum automatischen Bereitstellen von stückgutartigen, ggfs. kommissionierten Waren (14) in, auf oder an einzelne Transportelemente (11) wie Kartons, Paletten oder dgl., mit
- einer Vorrichtung (15; 22, 23; 28; 33; 40) zum Fördern der Waren (14) an wenigstens eine räumlich vorgegebene Abgabestelle (16),
- einer Vorrichtung (12; 19) zum kontinuierlichen Vorbeiführen der Transportelemente (11) an der wenigstens einen Abgabestelle (16), und
- einer Steuervorrichtung (6) zur Steuerung der Vorrichtung (15; 22, 23; 28; 33; 40) zum Fördern der Waren (14), der Abgabefunktion der wenigstens einen Abgabestelle (16) und der Vorrichtung (12; 19) zum Vorbeiführen der Transportelemente (11) derart, daß die für der jeweilige Transportelement (11) jeweils bestimmten Waren (14) zeitrichtig abgebbar sind.

11. Vorrichtung nach Anspruch 10,
dadurch **gekennzeichnet**,
daß eine Vorrichtung zum automatischen Bringen eines Transportelements (11) in den Aufnahmezustand vor dem Vorbeiführen an einer Abgabestelle (16) vorgesehen ist, wie eine Vorrichtung (42) zum automatischen Aufrichten von Kartons aus ihrem zusammengefalteten Zustand.

12. Vorrichtung nach Anspruch 10 oder 11,
dadurch **gekennzeichnet**,
daß eine Abgabestelle (16) durch einen Kommissionierer (1) gebildet ist, der wenigstens eine Rutsche (15) und/oder Abkippeinrichtung (23) zur Abgabe der Waren (14) in, auf bzw. an das jeweilige Transportelement (11) aufweist.

13. Vorrichtung nach einem der Ansprüche 10 bis 12,
dadurch **gekennzeichnet,**
daß eine geschlossene Förderschleife (22) vorgesehen ist, die wenigstens eine Abkippeinrichtung zur Abgabe der Waren (14) in, auf bzw. an ein jeweiliges Transportelement (11) aufweist.

14. Vorrichtung nach Anspruch 13,
dadurch **gekennzeichnet**,
daß mehrere Vorrichtungen zur Belieferung der geschlossenen Förderschleife (22) mit Waren (14) und/oder zur Abgabe der Waren (14) von dieser in, auf bzw. an jeweilige Transportelemente (11) vorgesehen sind (Fig. 7).

15. Vorrichtung nach einem der Ansprüche 13 oder 14,
dadurch **gekennzeichnet**,
daß wenigstens ein Förderband (12) zum Vorbeiführen von Transportelementen (11) an der zugehörigen Abgabestelle (16) vorgesehen ist.

16. Vorrichtung nach einem der Ansprüche 10 bis 15,
dadurch **gekennzeichnet**,
daß wenigstens ein Kommissionierautomat (45a, 45b) zum Zusammenstellen von Waren entsprechend eingehender Aufträge und zum Abgeben dieser Waren in, auf bzw. an jeweilige Transportelemente (11) vorgesehen ist.

17. Vorrichtung nach einem der Ansprüche 10 bis 16,
dadurch **gekennzeichnet**,
daß die Steuervorrichung (6) so ausgebildet ist, daß sie ein jeweiliges Transportelement (11a, 11b, 11c) aus einem Vorrat (41a, 41b, 41c) verschieden großer Transportelemente entsprechend der Art, Anzahl und/oder Größe der jeweiligen Waren (14) auswählt und diese zeitgerecht an der mindestens einen Abgabestelle (16) für diese Waren (14) vorbeiführt.

## Claims

1. Method of automatically loading goods in the form of articles of possibly ordered goods into or on to individual transport elements such as boxes, pallets or the like comprising the following stages:
■ automatic conveying of the goods (14) to at least one delivery point (16) whose position is predetermined,
■ continuous passing of the transport elements (11) past the delivery point (16) of which there is at least one,
■ delivery of the goods (14) at the delivery point (16) into or on to the respective transport element (11),
wherein the delivery and fetching of the goods (14) and passing of the transport elements (11) are controlled by a common control device (6), in such a manner that the goods intended for the respective transport element (11) are delivered at the right time.

2. Method according to claim 1, characterised in that before the supply of a transport element (11) to the delivery point (16) the transport element is automatically displaced into the receiving state, e.g. a box or the like is automatically erected (41, 42, 43) from its folded state.

3. Method according to claim 1 or 2, characterised in that the goods (14) to be loaded are passed from a conveyor belt or the like by an order picker (1; 15) having at least one slide and/or tipping device (23) into or on to respective transport elements (11), which move on at least one further conveyor belt (12) past the slide and/or tipping device.

4. Method according to one of claims 1 to 3, characterised in that the goods (14) to be loaded are moved on to a closed conveyor loop (22) and are passed via a tipping device (23) into or on to the transport elements (11) passing at least in part parallel thereto.

5. Method according to claim 4, characterised in that the goods (14) to be loaded are passed in at least two places on to the closed conveyor loop (22) and/or therefrom into or on to passing transport elements (11) (Fig. 7).

6. Method according to one of claims 4 or 5, characterised in that the transport elements (11) pass the tipping device (23) on at least one conveyor belt (12).

7. Method according to one of the preceding claims, characterised in that the goods (14) are passed by means of at least one picking robot (45a, 45b), which puts together the goods (14) automatically according to incoming orders into or on to the passing transport elements (11).

8. Method according to one of the preceding claims, characterised in that, controlled by the control device (6), from a corresponding supply (41a, 41b, 41c) of transport elements (11a, 11b, 11c) of different sizes or types a transport element is selected and if necessary prepared or erected which corresponds to the respective goods (14) according to type, number and/or size and is passed in time past the associated delivery point (16) of which there is at least one.

9. Method according to one of the preceding claims, characterised in that, controlled by the control device (6) the respective transport elements (11) are so supplied consecutively in time to different delivery points that in total only all the goods (14) of a respective order are supplied to this transport element (11) (Figures 5, 6, 7).

10. Apparatus for automatically loading goods (14) in the form of articles which may have been ordered into or on to individual transport elements (11) such as boxes, pallets or the like comprising
■ a device (15; 22, 23; 28; 33; 40) for conveying the goods (14) to at least one delivery point (16) of predetermined location,
■ a device (12; 19) for continuously passing the transport elements (11) past the delivery point (16) of which there is at least one, and
■ a control device (6) for controlling the device (15; 22, 23; 28; 33; 40) for conveying the goods (14), the delivery function of the delivery point (16) of which there is at least one, and the device (12; 19) for passing the transport elements (11) in such a manner that the goods (14) intended for the respective transport element (11) are deliverable at the right time.

11. Apparatus according to claim 10, characterised in that a device is provided for automatically bringing a transport element (11) into the receiving state before passing a delivery point (16), such as a device (42) for automatically erecting boxes from their folded state.

12. Apparatus according to claim 10 or 11, characterised in that a delivery point (16) is formed by an order picker (1), which has at least one slide (15) and/or tipping device (23) for delivering the goods (14) into or on to the respective transport element (11).

13. Apparatus according to one of claims 10 to 12, characterised in that a closed conveyor loop (22) is provided, which has at least one tipping device for delivering the goods (14) into or on to a respective transport element (11).

14. Apparatus according to claim 13, characterised in that a plurality of devices are provided for delivering the closed conveyor loop (22) with goods (14) and/or for delivering the goods (14) therefrom into or on to respective transport elements (11)(Fig. 7).

15. Apparatus according to one of claims 13 or 14, characterised in that at least one conveyor belt (12) is provided for passing transport elements (11) past the associated delivery point (16).

16. Apparatus according to one of claims 10 to 15, characterised in that at least one picking robot (45a, 45b) is provided for putting together goods according to incoming orders and for delivering these goods into or on to respective transport elements (11).

17. Apparatus according to one of claims 10 to 16, characterised in that the control device (6) is so formed that it selects from a supply (41a, 41b, 41c) of different sizes of transport elements a respective transport element (11a, 11b, 11c) according to the type, number and/or size of the respective goods (14) and passes the same in time to the delivery point (16) of which there is at least one for these goods (14).

## Revendications

1. Procédé pour le chargement automatique de marchandises sous la forme d'articles de détail, éventuellement préparées par commande, sur ou dans des éléments de transport individuels tels que des cartons, des palettes ou analogues, comprenant les étapes suivantes
- acheminement automatique des marchandises (14) jusqu'à au moins un poste de distribution (16) à position pré-établie spatialement,
- passage en continu des éléments de transport (11) devant le au moins un poste de distribution (16), et
- délivrance des marchandises (14), au poste de distribution (16), dans ou sur l'élément de transport considéré (11),
la délivrance, l'amenée des marchandises (14) ainsi que le passage des éléments de transport (11) étant commandés par un dispositif de commande commun (6) d'une façon telle, que les marchandises (14) respectivement déterminées pour l'élément de transport considéré (11) soient délivrées à l'instant opportun.

2. Procédé selon la revendication 1, caractérisé en ce qu'avant l'arrivée d'un élément de transport (11) au poste de distribution (16), l'élément de transport (11) est mis automatiquement dans l'état de réception, par exemple, dans le cas d'un carton ou analogue, est dressé automatiquement à partir de son état replié (41, 42, 43).

3. Procédé selon la revendication 1 ou 2, caractérisé en ce que les marchandises à charger (14) sont délivrées par une bande transporteuse ou analogue, au moyen d'un dispositif de préparation des commandes (1 ; 15) comportant au moins une goulotte et/ou un dispositif de basculement (23), dans ou sur l'élément de transport considéré (11), qui se déplace, sur au moins une autre bande transporteuse (12), devant la goulotte et/ou le dispositif de basculement.

4. Procédé selon l'une des revendications 1 à 3, caractérisé en ce que les marchandises à charger (14) sont amenées sur une boucle transporteuse fermée (22) et sont délivrées par l'intermédiaire d'un dispositif de basculement (23) dans ou sur les éléments de transport (11), qui passent en parallèle au moins par secteurs devant ce dernier.

5. Procédé selon la revendication 4, caractérisé en ce que les marchandises à charger (14) sont délivrées, en au moins deux emplacements, sur la boucle transporteuse fermée (22) et/ou, depuis cette boucle, dans ou sur des éléments de transport (11) passant devant cette dernière (figure 7).

6. Procédé selon l'une des revendications 4 ou 5, caractérisé en ce que les éléments de transport (11) sont avancés devant le dispositif de basculement (23) sur au moins une bande transporteuse (12).

7. Procédé selon l'une des revendications précédentes, caractérisé en ce que les marchandises (14) sont délivrées à l'aide d'au moins un automate de préparation des commandes (45a, 45b), qui rassemble automatiquement les marchandises (14) en fonction d'ordres arrivants, dans ou sur les éléments de transport (11) passant devant cet automate.

8. Procédé selon l'une des revendications précédentes, caractérisé en ce que d'une manière commandée par le dispositif de commande (6), un élément de transport, qui correspond aux marchandises considérées (14) quant à leur nature, leur nombre et/ou leur taille, est sélectionné dans une réserve correspondante (41a, 41b, 41c) d'éléments de transport de différentes tailles ou de différents types (11a, 11b, 11c), est éventuellement préparé, par exemple dressé, et est avancé, à l'instant opportun, devant le au moins un poste de distribution associé (16).

9. Procédé selon l'une des revendications précédentes, caractérisé en ce que l'élément de transport considéré (11) est amené successivement en temps opportun, d'une manière commandée par le dispositif de commande (6), à différents postes de distribution, de sorte que globalement seules toutes les marchandises (14) d'une commande considérée sont amenées à cet élément de transport (11) (figure 5, figure 6, figure 7).

10. Dispositif pour le chargement automatique de marchandises sous la forme d'articles de détail, éventuellement préparées par commande, sur ou dans des éléments de transport individuels tels que des cartons, des palettes ou analogues, comportant
- un dispositif (15 ; 22, 23 ; 28 ; 33 ; 40) pour acheminer les marchandises (14) jusqu'à au moins un poste de distribution (7) à position pré-établie spatialement,
- un dispositif (12 ; 19) pour faire passer en continu les éléments de transport (11) devant le au moins un poste de distribution (16), et
- un dispositif de commande (6) destiné à commander le dispositif (15 ; 22, 23 ; 28 ; 33 ; 40) pour acheminer les marchandises (14), ainsi que la fonction de délivrance du au moins un poste de distribution (16) et le dispositif (12 ; 19) pour faire passer les éléments de transport (11) devant ce dernier, d'une façon telle que les marchandises (14) destinées respectivement à l'élément de transport considéré (11) puissent être délivrées à l'instant opportun.

11. Dispositif selon la revendication 10, caractérisé en ce qu'il est prévu un dispositif pour amener, de façon automatique, un élément de transport (11) dans l'état de réception avant son passage devant un poste de distribution (16), tel qu'un dispositif (42) pour dresser automatiquement des cartons à partir de leur état replié.

12. Dispositif selon la revendication 10 ou 11, caractérisé en ce qu'un poste de distribution (16) est formé par une unité (1) de préparation des commandes, qui comporte au moins une goulotte (15) et/ou un dispositif de basculement (23) pour la délivrance des marchandises (14) dans ou sur l'élément de transport respectif (11).

13. Dispositif selon l'une des revendications 10 à 12, caractérisé en ce qu'il est prévu une boucle transporteuse fermée (22), qui comporte au moins un dispositif de basculement pour la délivrance des marchandises (14) dans ou sur un élément de transport respectif (11).

14. Dispositif selon la revendication 13, caractérisé en ce que plusieurs dispositifs sont prévus pour fournir des marchandises (14) à la boucle transporteuse fermée (22) et/ou pour délivrer les marchandises (14), depuis cette boucle, dans ou sur des éléments de transport respectifs (11) (figure 7).

15. Dispositif selon l'une des revendications 13 ou 14, caractérisé en ce qu'au moins une bande transporteuse (12) est prévue pour faire avancer des éléments de transport (11) devant le poste de distribution associé (16).

16. Dispositif selon l'une des revendications 10 à 15, caractérisé en ce qu'au moins un automate de préparation des commandes (45a, 45b) est prévu pour rassembler des marchandises en fonction d'ordres arrivants et pour délivrer ces marchandises dans ou sur des éléments de transport respectifs (11).

17. Dispositif selon l'une des revendications 10 à 16, caractérisé en ce que le dispositif de commande (6) est conçu de telle sorte qu'il sélectionne un élément de transport respectif (11a, 11b, 11c) dans une réserve (41a, 41b, 41c) d'éléments de transport de tailles différentes, en fonction de la nature, du nombre et/ou de la taille des marchandises respectives (14), et le fait passer, à l'instant opportun, devant le au moins un poste de distribution (16) pour ces marchandises (14).
